# EUROPÄISCHE PATENTANMELDUNG

(11) **EP 3 421 433 A1**
(43) Veröffentlichungstag der Anmeldung: **02.01.2019**
(21) Anmeldenummer: 18179457.9
(22) Anmeldetag: 25.06.2018
(51) Int. Cl.: C03B 33/06, C03B 33/037, C03B 35/26

(54) **VERFAHREN UND VORRICHTUNG ZUM ABLÄNGEN VON GLASROHREN**

(30) Priorität: 28.06.2017 DE 102017210942
(71) Anmelder: Schott AG, 55122 Mainz (DE)
(72) Erfinder: VÖLKL, Franz, 95688 Friedenfels (DE)
(74) Vertreter: Mehler Achler

(57) **Zusammenfassung**

Die Erfindung betrifft ein Verfahren zum Ablängen von Glasrohren (9) mit einer Länge L von einem sich mit einer Vorschubgeschwindigkeit v1 bewegenden Glasrohrstrang (2), wobei der Glasrohrstrang (2) mittels einer Analysevorrichtung (21) auf Defekte (22) untersucht wird und wobei ermittelt wird, ob ein abzutrennendes Glasrohr (9) entweder defektfrei (Fall 1) oder defektbehaftet (Fall 2) ist, wobei im Fall 1 ein defektfreies Glasrohr (9) der Länge L von dem Glasrohrstrang (2) abgetrennt wird. Um den Ausschuss beim Ablängen von Glasrohren (9) von einem Glasrohrstrang (2) zu verringern, sind bei dem erfindungsgemäßen Verfahren im Fall 2 folgende Schritte vorgesehen:
a) Ermitteln eines Abstands L_{A} des Defekts (22) in Längsrichtung von einem freien Ende (10) des abzutrennenden Glasrohrs (9), wobei der Abstand L_{A} von dem Teil des Defekts (22) mit dem größten Abstand zu dessen freiem Ende (10) bestimmt ist; und
b) Abtrennen eines defektbehafteten Glasrohrstücks (11) oder Glasrohrs (9) von dem Glasrohrstrang (2) in einem Abstand Ls von dem freien Ende (10) des Glasrohrs (9) in Abhängigkeit von L_{A}.

## Beschreibung

Die vorliegende Erfindung betrifft ein Verfahren sowie eine Vorrichtung zum Ablängen von Glasrohren mit einer Länge L von einem sich mit einer Vorschubgeschwindigkeit v₁ bewegenden Glasrohrstrang.

Für das Ablängen von Glasrohren einer bestimmten Länge, die anschließend als Rohlinge weiterverarbeitet werden können, wird zunächst eine geläuterte Glasschmelze mittels eines Formwerkzeugs in eine Rohrform gebracht. Dies geschieht beispielsweise im Danner- oder im Velloverfahren. Durch diese Verfahren wird ein endloser Glasrohrstrang zur Verfügung gestellt, der sich mit einer, in der Regel kontinuierlichen, Vorschubgeschwindigkeit bewegt. Von diesem Glasrohrstrang werden Glasrohre einer im Hinblick auf das Endprodukt vorgegebenen Länge L abgelängt. Die Geschwindigkeit der nachfolgenden Bearbeitungslinien ergibt sich aus dem Trenntakt, der seinerseits aus dem Quotienten der Vorschubgeschwindigkeit v₁ und der Glasrohrlänge L resultiert.

Das Trennen des Glasrohres von dem Glasrohrstrang (auch "Vereinzeln") erfolgt durch lokales Anritzen der Oberfläche des Glasrohrstranges, wodurch eine Sollbruchstelle erzeugt wird, und anschließend mechanisches Belasten des Glasrohrstranges an seinem freien Ende, wodurch das Glasrohr an der Sollbruchstelle von dem nachfolgenden Glasrohrstrang abbricht. Die mechanische Belastung wird durch die Gewichtskraft des freien Endes des Glasrohrstrangs aufgebracht, welches aus diesem Grund nicht unterstützt wird. Zur Verbesserung der Bruchqualität kann der Glasrohrstrang an der Sollbruchstelle gekühlt werden, um einen spontanen Bruch an dieser Stelle herbeizuführen, also einen Bruch durch Thermoschock, wie dies beispielsweise aus der Schrift JP 2007-331994 A bekannt ist. Die Trennstelle bildet dann glasrohstrangseitig das freie Ende des nachfolgenden abzutrennenden Glasrohres.

Aus Gründen der Qualitätssicherung kann der Glasrohrstrang auf Defekte untersucht werden, so dass Glasrohre, die einen Defekt aufweisen, aussortiert werden können. Zu den Defekten zählen insbesondere Bläschen, d. h. Lufteinschlüsse, Kratzer, Schlieren und Verfärbungen.

Aus der DE 10 2009 014 418 B3 ist ein Ziehverfahren zur Herstellung zylinderförmiger Bauteile aus Quarzglas bekannt. Die Bauteile werden von einem kontinuierlichen Quarzglasstrang abgelängt. Bei dem Abtrennen der Bauteile von dem Quarzglasstrang kann es durch die dafür notwendigen mechanischen Einwirkungen zu Durchmesserschwankungen der Bauteile kommen. Das offenbarte Verfahren dient nun nicht dazu, diese Schwankungen zu reduzieren. Vielmehr werden die Schwankungen in günstigen Bereichen des Quarzglasstrangs positioniert, so dass sie beispielsweise bei der Weiterverarbeitung der Bauteile eliminiert werden können.

Die US 3,205,740 beschreibt die Verarbeitung von aus einem kontinuierlichen Glasstrang hergestellten Glasscheiben. Hierfür stehen nacheinander ein sogenannter Z-Cutter und S-Cutter zur Verfügung, welche den Glasstrang zunächst quer zur Fließrichtung und anschließend senkrecht hierzu unterteilen. Vor den beiden Schneideinrichtungen befinden sich mehrere Analysevorrichtungen, mittels derer ermittelt wird, wo in dem Glasstrang sich Defekte befinden. Zweck des Verfahrens ist es, aus dem flächigen Glasstrang möglichst viele möglichst große defektfreie Glasscheiben herauszutrennen, wobei diese Glasscheiben unterschiedliche Größen aufweisen.

Aus der JP 2008-81342 A ist eine Vorrichtung zum Aussortieren defekter Glasrohre bekannt, die ein Führungselement aufweist, mit dem vereinzelte Glasrohre auf eine Transporteinrichtung gelenkt werden, wenn sie als defektfrei erkannt wurden, und in einen Ausschussbehälter, wenn sie als defektbehaftet erkannt wurden. Hiernach wird ein Glasrohr also zunächst von dem Glasrohrstrang abgetrennt und anschließend wird berücksichtigt, ob sich ein Defekt in dem Glasrohr befindet oder nicht. Auf diese Weise wird entweder ein vollständiges, defektfreies Glasrohr der Weiterverarbeitung zugeführt oder ein vollständiges, defektbehaftetes Glasrohr entsorgt. Dadurch entsteht bei den bekannten Verfahren eine nicht unwesentliche Menge an Ausschuss. Dieser Ausschuss kann zwar recycelt werden, dabei muss jedoch Energie aufgewendet werden, um das Glas erneut einzuschmelzen.

Es ist daher Aufgabe der Erfindung, den Ausschuss beim Ablängen von Glasrohren von einem Glasrohrstrang zu verringern, um den Gesamtenergiebedarf und Werkstoffeinsatz bei der Glasrohrherstellung zu senken.

Diese Aufgabe wird durch das Verfahren zum Ablängen von Glasrohren gemäß Anspruch 1 sowie die Vorrichtung zum Ablängen von Glasrohren gemäß Anspruch 11 gelöst.

Vorteilhafte Weiterbildungen sind Gegenstand der Unteransprüche.

Bei dem erfindungsgemäßen Verfahren zum Ablängen von Glasrohren mit einer Länge L von einem sich mit einer Vorschubgeschwindigkeit v₁ bewegenden Glasrohrstrang wird der Glasrohrstrang mittels einer Analysevorrichtung auf Defekte untersucht, wobei ermittelt wird, ob ein abzutrennendes Glasrohr entweder defektfrei (Fall 1) oder defektbehaftet (Fall 2) ist. Im Fall 1 wird ein defektfreies Glasrohr der Länge L von dem Glasrohrstrang abgetrennt. Das erfindungsgemäße Verfahren ist dadurch gekennzeichnet, dass im Fall 2 folgende Schritte ausgeführt werden:
a) Ermitteln eines Abstands L_{A} des Defekts in Längsrichtung von einem freien Ende des abzutrennenden Glasrohrs, wobei der Abstand L_{A} von dem Teil des Defekts mit dem größten Abstand zu dessen freiem Ende bestimmt ist; und
b) Abtrennen eines defektbehafteten Glasrohrstücks oder Glasrohrs von dem Glasrohrstrang in einem Abstand L_{S} von dem freien Ende des Glasrohrs in Abhängigkeit von L_{A}.

Bei den bekannten Verfahren werden unabhängig vom Auffinden eines Defekts stets Glasrohre der Länge L abgetrennt, was dazu führt, dass auch defektbehaftete Glasrohre immer die Länge L aufweisen, wodurch unnötig viel Ausschuss anfällt. Durch das erfindungsgemäße Verfahren wird erstmals die Position des Defekts in Form des Abstands L_{A} von dem freien Ende des Glasrohrs ermittelt und beim Abtrennvorgang berücksichtigt. Dadurch ist es möglich, das defektbehaftete Glasrohrstück in einem Abstand L_{S} ungleich L vom Rohrstrang abzutrennen, bevorzugt mit einer Länge L_{S} < L, wenn der Abstand L_{A} des Defekts vom freien Ende des abzutrennenden Glasrohrs dies erlaubt. Das Abtrennen findet also erstmals von dem Parameter L_{A} gesteuert statt.

Vorteilhafterweise wird der Abstand L_{S} so gewählt, dass er größer als L_{A} ist, insbesondere um ein vorbestimmtes Δ (L_{S} = L_{A} + Δ), was ebenfalls erfordert, dass der Abstand L_{A} des Defekts vom freien Ende des abzutrennenden Glasrohrs dies erlaubt.

Dabei gilt es zu beachten, dass Defekte in der Regel nicht punktförmig sind, sondern eine Ausdehnung, insbesondere auch in Längsrichtung des Glasrohres, aufweisen. Den Abstand L_{A} eines Defekts vom freien Ende des abzutrennenden Glasrohrs bestimmt deshalb genau genommen der Teil des Defekts mit dem größten Abstand zu dessen freiem Ende.

Deshalb ist es insbesondere nicht ausgeschlossen, dass sich der Defekt auch bis zum Abstand L oder L - Δ vom freien Ende des abzutrennenden Glasrohres oder darüber hinaus erstreckt (L_{A} ≥ L oder L_{A} + Δ ≥ L). In diesem Fall würde auch bei dem erfindungsgemäßen Verfahren zunächst ein defektbehaftetes Glasrohr der Länge L abgetrennt werden. Es gilt demnach vorzugsweise immer L_{S} ≤ L. Der "Rest" des Defekts wird dann im nächsten Durchlauf abgetrennt. L_{S} ≤ L geht also vor die Bedingung L_{S} > L_{A} bzw. L_{S} = L_{A} + Δ. Das erfindungsgemäße Verfahren spielt seinen Vorteil immer dann aus, wenn sich der Defekt in einem Abstand L_{A} ≤ L oder L_{A} + Δ ≤ L vom freien Ende des abzutrennenden Glasrohres befindet.

Die Vorschubgeschwindigkeit v₁ ist bevorzugt konstant.

Es gibt verschiedene Möglichkeiten zur Untersuchung des Glasrohrstrangs auf Defekte. Vorteilhafterweise erfolgt die Untersuchung durch ein optisches Verfahren, insbesondere ein Durchlichtverfahren. Die Untersuchung des Glasrohrstrangs auf Defekte erfolgt bevorzugt kontinuierlich.

Bei vorteilhaften Weiterbildungen des erfindungsgemäßen Verfahrens ist vorgesehen, dass der Glasrohrstrang ausgehend von dem freien Ende des abzutrennenden Glasrohrs in n + 1 Abschnitte A₁ bis A_{n + 1} identischer Länge L/n mit n = {2, 3, 4, ...} unterteilt wird, dass nach Schritt a) ermittelt wird, in welchem Abschnitt A_{D} = {A₁,..., Aₙ} der Defekt, also der Ort des (größten) Abstands L_{A}, liegt und dass der Glasrohrstrang an einer Grenze zwischen Abschnitt A_{D} und Abschnitt A_{D+1} = {A₂,..., Aₙ₊₁} abgetrennt wird. Auf diese Weise wird das abzutrennende Glasrohr in einzelne Abschnitte unterteilt, wobei anschließend hinsichtlich der einzelnen Abschnitte berücksichtigt werden kann, ob diese defektbehaftet sind oder nicht. Ist beispielsweise ein Glasrohr in vier Abschnitte A₁ bis A₄ unterteilt und befindet sich in Abschnitt A₂ ein Defekt, so wird an der Grenze zwischen den Abschnitten A₂ und A₃ ein Glasrohrstück von dem Glasrohrstrang abgetrennt. Dadurch entsteht nur ein Glasrohrstück der Länge L/2 als Ausschuss und nicht wie bei einem vergleichbaren Fall bei dem bekannten Verfahren ein defektbehaftetes Glasrohr der Länge L.

Befinden sich in mehreren Abschnitten Defekte, so wird bevorzugt der zahlenmäßig höchste Abschnitt für die Bestimmung des Ortes des Trennungsvorgangs herangezogen. Befinden sich beispielsweise in dem oben genannten Beispiel jeweils ein Defekt in den Abschnitten A₂ und A₃, so wird der zahlenmäßig höchste Abschnitt A₃ herangezogen, so dass an der Grenze zwischen den Abschnitten A₃ und A₄ ein Glasrohrstück von dem Glasrohrstrang abgetrennt wird. Das gleiche gilt bei einem mehrere Abschnitte überspannenden Defekt.

Nach dem Abtrennen bildet die Trennstelle wieder das freie Ende des Glasrohstranges und der zahlenmäßig niedrigste am Glasrohrstrang verbliebene Abschnitt bildet den neuen Abschnitt A₁ für das nächste abzutrennende Glasrohr. Das erfindungsgemäße Verfahren wird dann für das nächste abzutrennende Glasrohr erneut durchgeführt.

Besonders bevorzugt beträgt n = 2. Auf diese Weise wird der Glasrohrstrang ausgehend von dem freien Ende des abzutrennenden Glasrohres in drei Abschnitte A₁ bis A₃ identischer Länge L/2 unterteilt. Das abzutrennende Glasrohr besteht in diesem Fall aus den Abschnitten A₁ und A₂.

Defektfreie Glasrohre werden nach dem Abtrennen bevorzugt einer Transportvorrichtung übergeben. Mittels der Transportvorrichtung können die defektfreien Glasrohre einer Weiterverarbeitung zugeführt werden. Die Transportvorrichtung weist eine Vorschubgeschwindigkeit v₂ auf. Die Vorschubgeschwindigkeit v₂ ist bevorzugt konstant. Dadurch werden die Glasrohre der Weiterverarbeitung regelmäßig zugeführt, was die Automatisierung der Weiterverarbeitung erleichtert.

Bei vorteilhaften Weiterbildungen weist die Transportvorrichtung eine Mehrzahl von Fächern für Glasrohre auf. In jedem Fach kann ein einzelnes Glasrohr angeordnet werden, wodurch ein sicherer Transport ermöglicht wird. Zudem kann jedes Glasrohr einem bestimmten Fach zugeordnet werden, so dass die Glasrohre eindeutig lokalisierbar sind.

Vorteilhafterweise werden die Fächer durch auf einer Förderkette oder einem Förderband angeordnete Mitnehmer gebildet. Die Mitnehmer werden bevorzugt durch Winkelleisten oder Blechprofile oder Mitnehmerstifte gebildet, zwischen bzw. in denen die Glasrohre während des Transports zum Liegen kommen.

Die Länge L der Glasrohre beträgt typischerweise zwischen 1 m und 3 m. Die Vorschubgeschwindigkeit v₁ beträgt bevorzugt zwischen 5 m/min und 600 m/min. Die Vorschubgeschwindigkeit v₁ ist in der Regel von der Geometrie und Ausführung der Wanne, in der sich die Glasschmelze befindet, des Formwerkzeugs und des herzustellenden Glasrohres abhängig.

Grundsätzlich führt das Abtrennen von defektbehafteten Glasrohrstücken dazu, dass es zu einer Unregelmäßigkeit bei der Bereitstellung von defektfreien Glasrohren kommt, weil in der Regel die Defekte in unregelmäßigen Abständen auftreten. Um diese Unregelmäßigkeit jedenfalls teilweise zu kompensieren und somit die Weiterverarbeitung mit dem Ablängen synchronisieren zu können, wird gemäß einer vorteilhaften Ausführungsform der Erfindung die Vorschubgeschwindigkeit v₂ und die Teilung der Fächer so gewählt, dass unmittelbar nacheinander vereinzelte defektfreie Glasrohre in jedes n-te Fach der Transportvorrichtung übergeben werden. Ist die Vorschubgeschwindigkeit v₁ des Glasrohrstrangs konstant, so erfolgt der Abtrennvorgang während der Bewegung des Glasrohrstrangs. Das abgetrennte Glasrohr behält nach dem Abtrennvorgang seinen Impuls bei und fliegt auf einer Kurvenbahn zur Transportvorrichtung, und insbesondere in ein Fach der Transportvorrichtung. Will man gezielt jedem n-ten Fach ein defektfreies Glasrohr zuordnen, muss also die Vorschubgeschwindigkeit v₂ der Transportvorrichtung mit der Vorschubgeschwindigkeit v₁ des Glasrohrstranges synchronisiert sein. Genauer muss der Trenntakt ein n-tel des Vorschubtaktes der Fächer sein. Der Vorschubtakt wird aus dem Quotienten der Vorschubgeschwindigkeit v₂ und des Abstandes der Fächer gebildet. Weitere Parameter, die in die Synchronisation einfließen, sind also die Glasrohrlänge L und die Teilung bzw. der Abstand der Fächer. Wird die Vorschubgeschwindigkeit v₂ nun so gewählt, dass im "Regelbetrieb", d. h. wenn bei mehreren aufeinanderfolgenden Glasrohren kein Defekt vorliegt, in jedem n-ten Fach ein Glasrohr angeordnet ist, so sind zwischen den Fächern mit Glasrohren jeweils n - 1 Fächer der Transportvorrichtung leer. Der besondere Vorteil dieser Weiterbildung besteht darin, dass auch, nachdem ein oder mehrere defektbehaftete Glasrohrstücke der Länge L/n, 2L/n, 3L/n, ..., abgetrennt wurden, das nächste defektfreie Glasrohr wieder exakt einem Fach zugeordnet ist. Damit ist wieder eine Regelmäßigkeit hergestellt und die Weiterverarbeitung kann hierauf synchronisiert werden.

Wird beispielsweise bei n = 3 der Glasrohrstrang aufgrund eines Defekts an der Grenze zwischen dem Abschnitt A₁ und A₂ abgetrennt und somit der Abschnitt A₁ als Ausschuss verworfen, so führt dies dazu, dass das Fach 3 (allgemein n), in dem sich ohne den Defekt das nächste defektfreie Glasrohr befunden hätte, leer bleibt und das nun tatsächlich defektfreie nächste Glasrohr in dem unmittelbar darauffolgenden Fach 4 (n+1) angeordnet wird. In der Transportvorrichtung sind dadurch anstatt zwei nunmehr drei Fächer (1, 2, 3) in Folge frei. Auf eine zusätzliche Steuerung der Transportvorrichtung bzw. der Vorschubgeschwindigkeit v₂ kann verzichtet werden, da durch das Festlegen der Abschnitte und der Fächer jede Variation des Abtrennens von Glasrohren und Glasrohrstücken möglich ist, so dass jedes defektfreie Glasrohr in einem Fach und nicht zwischen zwei Fächern landet.

Eine alternative Lösung zur Synchronisation mit einer nachfolgenden Weiterverarbeitung sieht vor, dass abgetrennte, defektfreie Glasrohre gepuffert und anschließend regelmäßig abtransportiert werden. Der regelmäßige Abtransport der defektfreien Glasrohre aus der Pufferung erfolgt bevorzugt mit einer Frequenz, die geringer ist als der regelmäßige Trenntakt, mit dem defektfreie Glasrohre vereinzelt würden, wenn keine Defekte in dem Glasstrang vorlägen. Die Differenz der Frequenzen von Trenntakt und Abtransport gleicht mit anderen Worten die durch das Abtrennen von defektbehafteten Glasrohstücken bedingten Wartezeiten aus.

Das Trennen des Glasrohres von dem Glasrohrstrang erfolgt wie bekannt durch lokales Anritzen der Oberfläche des Glasrohrstranges und anschließend mechanisches Belasten durch die Gewichtskraft des freien Endes des Glasrohrstrangs. Ein defektbehaftetes abzutrennendes Glasrohrstück, dessen Länge kleiner ist als die Länge L des Glasrohrs, erfährt aufgrund des kürzeren Hebelarms und des geringeren Eigengewichts ein geringeres Dreh- bzw. Biegemoment. Es ist jedoch wünschenswert, dass auch kürzere defektbehaftete Glasrohrstücke das gleiche Bruchverhalten zeigen wie defektfreie längere Glasrohre. Bei vorteilhaften Weiterbildungen des erfindungsgemäßen Verfahrens ist daher vorgesehen, dass beim Abtrennen eines Glasrohrstücks mit einer Länge L_{S} < L eine die Gravitationskraft unterstützende Kraft F_{U} auf das abzutrennende Glasrohrstück ausgeübt wird. Durch die zusätzliche Kraft F_{U} wird an der Trennstelle das gleiche Bruchverhalten erzeugt, das vorliegt, wenn ein Glasrohr der Länge L abgetrennt wird.

Bevorzugt entspricht die unterstützende Kraft F_{U} wenigstens der Differenz aus einer Gewichtskraft F_{R} eines defektfreien Glasrohrs der Länge L und einer Gewichtskraft F_{S} des abgetrennten Glasrohrstücks (F_{U} ≥ F_{R} - F_{S}). Ebenfalls bevorzugt werden die Kraft F_{U} und deren Angriffspunkt so gewählt, dass das Bruchverhalten dem Bruchverhalten entspricht, das beim Abtrennen eines Glasrohrs vorliegt. Insbesondere werden die Kraft F_{U} und deren Angriffspunkt so gewählt, dass die an der Trennstelle entstehenden Momente denen entsprechen, die beim Abtrennen eines Glasrohrs der Länge L vorliegen. Ein zusätzliches Dreh- oder Biegemoment M_{U} bezogen auf die Trennstelle entspricht bevorzugt wenigstens der Differenz aus dem durch ein Glasrohr der Länge L verursachten Dreh- oder Biegemoment M_{R} und dem durch das Glasrohrstück verursachten Dreh- oder Biegemoment M_{S}.

Nach dem Abtrennen werden defektbehaftete Glasrohre und Glasrohrstücke bevorzugt in einen Auffangbehälter überführt. Aus dem Auffangbehälter können die defektbehafteten Glasrohre und Glasrohrstücke anschließend dem Recycling zugeführt werden.

Die erfindungsgemäße Vorrichtung zum Ablängen von Glasrohren mit einer Länge L von einem sich mit einer Vorschubgeschwindigkeit v₁ bewegenden Glasrohrstrang weist eine Analysevorrichtung zur Untersuchung des Glasrohrstrangs auf Defekte, eine Trenneinrichtung zum Abtrennen von Glasrohren und Glasrohrstücken von dem Glasrohrstrang sowie eine Transportvorrichtung zum Abtransportieren der abgetrennten Glasrohre auf. Die Vorrichtung ist dadurch gekennzeichnet, dass sie zur Durchführung des oben beschriebenen Verfahrens ausgebildet ist. Dies wird dadurch realisiert, dass die Analysevorrichtung eingerichtet ist, zu ermitteln, ob ein abzutrennendes Glasrohr entweder defektfrei (Fall 1) oder defektbehaftet (Fall 2) ist. Die Analysevorrichtung ist ferner eingerichtet, im Fall 1 ein Steuersignal auszugeben, welches die Trenneinrichtung veranlasst, ein defektfreies Glasrohr der Länge L von dem Glasrohrstrang abzutrennen. Und die Analysevorrichtung ist eingerichtet, im Fall 2 zu ermitteln, in welchem Abstands L_{A} der Defekt in Längsrichtung vom freien Ende des abzutrennenden Glasrohrs lokalisiert ist, und ein Steuersignal auszugeben, welches die Trenneinrichtung veranlasst, ein defektbehaftetes Glasrohrstück oder Glasrohr von dem Glasrohrstrang in einem Abstand L_{S} von dem freien Ende des Glasrohrs in Abhängigkeit von L_{A} abzutrennen.

Vorzugsweise umfasst die Vorrichtung einen Auffangbehälter für defektbehaftete Glasrohre und Glasrohrstücke. Ein Auffangbehälter ermöglicht ein effizientes Sammeln von Glasrohren und Glasrohrstücken mit Defekten, so dass diese anschließend dem Recycling zugeführt werden können.

Vorteilhafterweise weist die Vorrichtung eine Sortiereinrichtung auf, mittels der defektbehaftete Glasrohre und Glasrohrstücke in den Auffangbehälter und defektfreie Glasrohre zu der Transportvorrichtung überführt werden. Die Sortiereinrichtung ermöglicht dadurch eine automatisierte Sortierung der defektfreien Glasrohre von den defektbehafteten Glasrohren und Glasrohrstücken.

Wie oben beschrieben, weist die Transportvorrichtung bevorzugt eine Mehrzahl von Fächern mit einem bestimmten Abstand (Teilung) auf und ist eingerichtet, mit einer an den Trenntakt angepassten Vorschubgeschwindigkeit zu operieren, wobei unmittelbar nacheinander vereinzelte defektfreie Glasrohre in jedes n-te Fach der Transportvorrichtung übergeben werden. Zugleich ist die Analysevorrichtung vorteilhafterweise eingerichtet, im Fall 2 den Glasrohrstrang ausgehend vom freien Ende des abzutrennenden Glasrohrs rechnerisch in n + 1 Abschnitte A₁ bis A_{n + 1} identischer Länge L/n mit n = {2, 3, 4, ...} zu unterteilen, zu ermitteln, in welchem dieser Abschnitt A_{D} = {A₁,..., Aₙ} der Defekt liegt und ein Steuersignal auszugeben, welches die Trenneinrichtung dazu veranlasst, den Glasrohrstrang an der Grenze zwischen Abschnitt A_{D} und Abschnitt A_{D+1} = {A₂,..., Aₙ₊₁} abzutrennen. In dieser Kombination wird auch bei typischerweise unregelmäßig auftretenden Defekten eine Regelmäßigkeit des Abtransports defektfreier Glasrohre sichergestellt und die Weiterverarbeitung kann hierauf synchronisiert werden.

Um alternativ eine Zwischenspeicherung (Pufferung) der defektfreien Glasrohre zu ermöglichen, weist die Vorrichtung zwischen der Trenneinrichtung oder, soweit vorgesehen, der Sortiereinrichtung und der Transportvorrichtung vorteilhafterweise eine Puffereinrichtung auf, die eingerichtet ist, regelmäßig oder unregelmäßig von dem Glasrohrstrang abgetrennte defektfreie Glasrohre von der Trenneinrichtung aufzunehmen und die defektfreien Glasrohre regelmäßig an die Transportvorrichtung abzugeben. Die Zuführung von Glasrohren erfolgt dabei insbesondere unregelmäßig, wenn zwischenzeitlich defektbehaftete Glasrohre oder Glasrohrstücke abgetrennt und als Ausschuss verworfen wurden. Der Abtransport aus der Puffereinrichtung erfolgt regelmäßig, was hinsichtlich der Weiterverarbeitung vorteilhaft ist.

Vorzugsweise weist die Trenneinrichtung einen Bruchkraftverstärker auf, der eingerichtet ist, eine die Gravitationskraft unterstützende Kraft F_{U} auf ein abzutrennendes Glasrohrstück mit einer Länge L_{S} < L auszuüben. Wie oben beschrieben, wird durch den Bruchkraftverstärker bevorzugt das gleiche Bruchverhalten erzeugt, wie es bei einem Glasrohr der Länge L vorläge.

Besonders bevorzugt weist der Bruchkraftverstärker ein Exzenterelement und/oder einen einstellbaren Druckluftzylinder und/oder einen umlaufenden Arm auf, das/der eingerichtet ist, unmittelbar oder mittels eines Druckstücks von oben auf das abzutrennende Glasrohrstück zu drücken. Weiterhin bevorzugt wird die Kraft F_{U} servogesteuert aufgebracht. Durch servogesteuerte Einheiten lassen sich die Kraft F_{U} sowie der Zeitpunkt des Einwirkens genau steuern. Außerdem wird dadurch eine Einwirkung des Bruchkraftverstärkers bei einem defektfreien Glasrohr vermieden.

Die Erfindung wird nachfolgend anhand von fünf Figuren beispielhaft dargestellt und erläutert. Es zeigen:
- Figur 1: eine Vorrichtung zum Ablängen von Glasrohren gemäß einer ersten Ausführungsform,
- Figur 2: eine Vorrichtung zum Ablängen von Glasrohren gemäß einer zweiten Ausführungsform,
- Figur 3: eine Vorrichtung zum Ablängen von Glasrohren gemäß einer dritten Ausführungsform,
- Figur 4: eine Vorrichtung zum Ablängen von Glasrohren gemäß einer vierten Ausführungsform, und
- Figur 5: einen Endbereich eines Glasrohrstrangs.

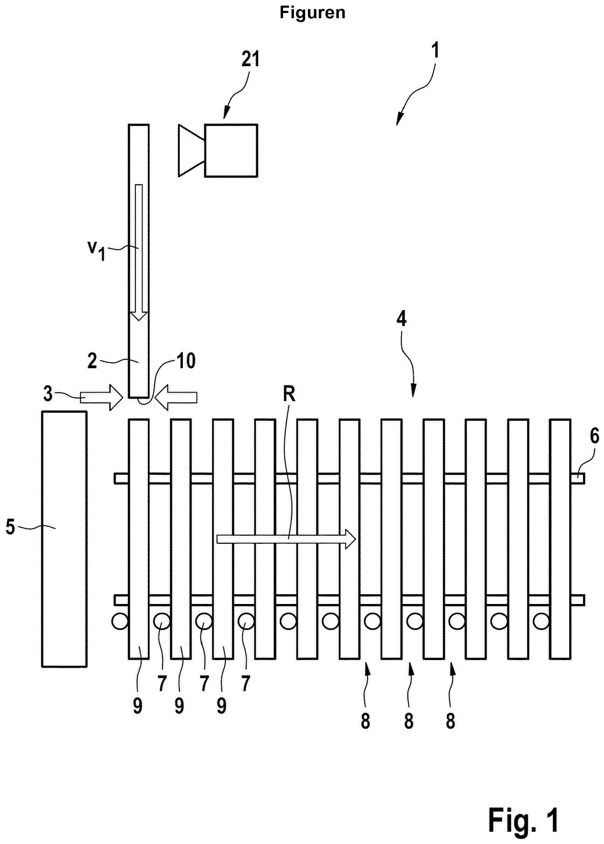

Figur 1 zeigt eine Vorrichtung 1 zum Ablängen von Glasrohren von einem Glasrohrstrang 2. Der Glasrohrstrang 2 wird mit einer kontinuierlichen Vorschubgeschwindigkeit v₁ in Pfeilrichtung transportiert. Die Vorrichtung 1 weist eine Analysevorrichtung 21, eine Trenneinrichtung 3, die durch zwei Pfeile symbolisiert wird, eine Transportvorrichtung 4 sowie einen Auffangbehälter 5 auf. Die Transportvorrichtung 4 weist ein Förderband 6 auf, auf dem Mitnehmer 7 angeordnet sind. Die Mitnehmer 7 bilden Fächer 8, wobei zwischen jeweils zwei Mitnehmern 7 ein Fach 8 gebildet wird.

Erfindungsgemäß wird der Glasrohrstrang 2 mittels der Analysevorrichtung 21 auf Defekte untersucht, wobei zumindest für das nächste abzutrennende Glasrohr 9 festgestellt wird, ob dieses defektfrei oder defektbehaftet ist. Ist das abzutrennende Glasrohr 9 defektfrei, so wird es mittels der Trenneinrichtung 3 von dem Glasrohrstrang 2 abgetrennt. Nach dem Abtrennen bewegt sich das abgetrennte Glasrohr 9 aufgrund der Vorschubgeschwindigkeit v₁ des Glasrohrstrangs 2 weiter, so dass es in ein bereitgehaltenes freies Fach 8 der Transportvorrichtung 4 gelangt. Anschließend wird das Förderband 6 der Transportvorrichtung 4 in einer Vorschubrichtung R bewegt, so dass ein neues, freies Fach 8 für das nächste defektfreie Glasrohr 9 zur Verfügung steht.

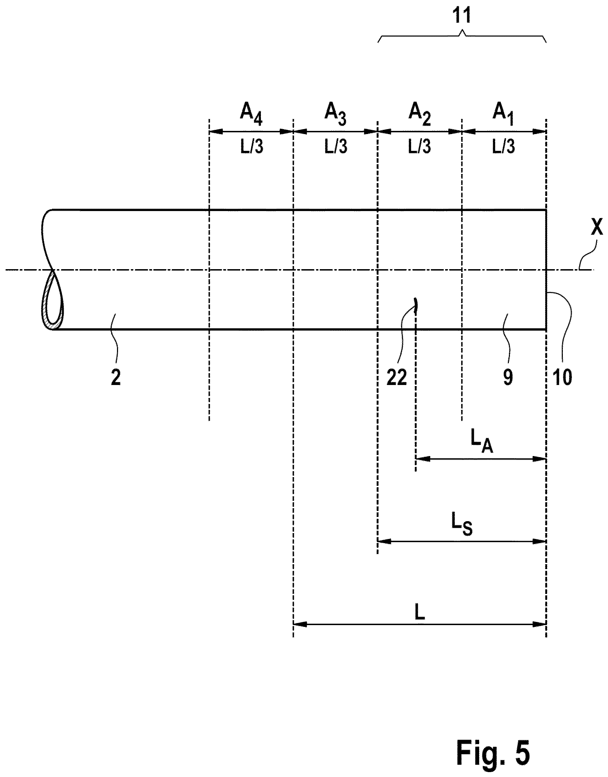

Wird festgestellt, dass das abzutrennende Glasrohr 9 defektbehaftet ist, so wird ein Abstand L_{A} des Defekts von dem freien Ende 10 des Glasrohrstrangs 2 ermittelt (siehe Figur 5). Anschließend wird der Glasrohrstrang 2 an einer Stelle mit einem Abstand L_{S} von dem freien Ende des Glasrohrs in Abhängigkeit von L_{A} abgetrennt. Dadurch entsteht entweder ein defektbehaftetes Glasrohr 9 der Länge L oder ein defektbehaftetes Glasrohrstück der Länge L_{S} < L. Defektbehaftete Glasrohre 9 und Glasrohrstücke werden nach dem Abtrennen von dem Glasrohrstrang 2 in den Auffangbehälter 5 überführt. Dies kann beispielsweise durch eine nicht dargestellte Sortiereinrichtung erfolgen.

Während das defektbehaftete Glasrohr oder Glasrohrstück abgetrennt und aussortiert wird, steht die Transportvorrichtung 4 still, bis das nächste defektfreie Glasrohr 9 in das nächste freie Fach 8 übergeben wurde. Auf diese Weise wird bei der in Figur 1 dargestellten Ausführungsform jedes Fach 8 der Transportvorrichtung 4 mit einem Glasrohr 9 gefüllt. Zugleich erfolgt aber eine zeitlich unregelmäßige Bereitstellung von defektfreien Glasrohren 9 durch die Transportvorrichtung 4 für eine sich daran anschließende nicht dargestellte Vorrichtung zur Weiterverarbeitung der Glasrohre 9.

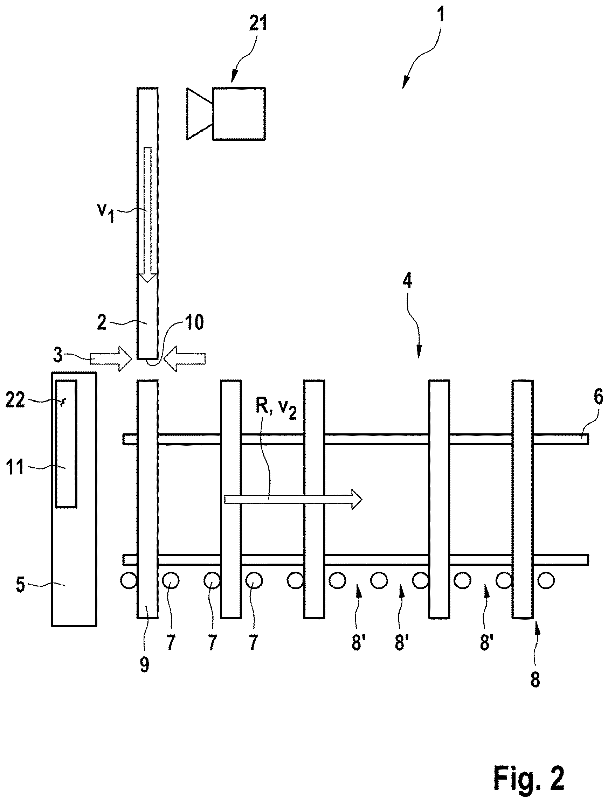

Die in Figur 2 dargestellte Ausführungsform der Vorrichtung 1 zum Ablängen von Glasrohren 9 von einem Glasrohrstrang 2 weist ebenfalls eine Analysevorrichtung 21, eine Trenneinrichtung 3, eine Transportvorrichtung 4 und einen Auffangbehälter 5 auf. Der Glasrohrstrang 2 weist erneut eine kontinuierliche Vorschubgeschwindigkeit v₁ auf. Die Transportvorrichtung 4 weist auch hier ein Förderband 6 mit Mitnehmern 7 auf. Das Förderband 6 bewegt sich bei dieser Ausführungsform in einer Vorschubrichtung R kontinuierlich mit einer Vorschubgeschwindigkeit v₂. Die Vorschubgeschwindigkeit v₂ ist so bemessen, dass bei einer aufeinander folgenden Herstellung mehrerer defektfreier Glasrohre 9 in jedem zweiten Fach 8 ein Glasrohr 9 angeordnet wird. Zwischen zwei Fächern 8, in denen sich jeweils ein Glasrohr 9 befindet, ist in diesem Fall ein einzelnes Leerfach 8' vorhanden.

Erfindungsgemäß wird auch hier der Glasrohrstrang 2 kontinuierlich auf Defekte 22 untersucht. Für jedes abzutrennende Glasrohr 9 wird ermittelt, ob das Glasrohr 9 defektfrei oder defektbehaftet ist. Ein defektfreies Glasrohr 9 wird durch die Trenneinrichtung 3 von dem Glasrohrstrang 2 getrennt und fällt automatisch und bedingt durch die Vorschubgeschwindigkeit v₁ in ein Fach 8 der Transportvorrichtung 4. Bei einem defektbehafteten Glasrohr 9 wird ermittelt, in welchem Bereich des Glasrohrs 9 der Defekt 22 angeordnet ist. Hierzu wird der Glasrohrstrang 2 ausgehend von dem freien Ende 10 des abzutrennenden Glasrohrs 9 in eine Mehrzahl von Abschnitten unterteilt (bei der in Figur 2 gezeigten Ausführungsform in drei Abschnitte, n = 2) und anschließend wird ermittelt, in welchem der Abschnitte der Defekt 22 angeordnet ist. Im vorliegenden Fall besteht das abzutrennende Glasrohr 9 aus zwei Abschnitten A₁, A₂. Es wird nun ermittelt, ob sich der Defekt 22 in dem Abschnitt A₁ oder in dem Abschnitt A₂ befindet.

Befindet sich der Defekt 22 in Abschnitt A₁, so wird der Glasrohrstrang 2 an der Grenze zwischen den Abschnitten A₁ und A₂ abgetrennt, so dass ein defektbehaftetes Glasrohrstück 11 entsteht. Das Glasrohrstück 11 wird dann durch eine in dieser Figur nicht dargestellte Sortiereinrichtung in den Auffangbehälter 5 geführt. Da sich das Förderband 6 der Transportvorrichtung 4 kontinuierlich in der Vorschubrichtung R bewegt, entsteht ein zusätzliches Leerfach 8'. Wird unmittelbar danach ein defektfreies Glasrohr 9 von dem Glasrohrstrang 2 abgelängt, so befinden sich zwischen diesem und dem vorangegangenen defektfreien Glasrohr 9 zwei Leerfächer 8'.

Wird bei einem defektbehafteten Glasrohr 9 ermittelt, dass der Defekt 22 in Abschnitt A₂ angeordnet ist, so wird ein vollständiges, aber defektbehaftetes Glasrohr 9 der Länge L abgetrennt und durch die Sortiereinrichtung in den Auffangbehälter 5 überführt.

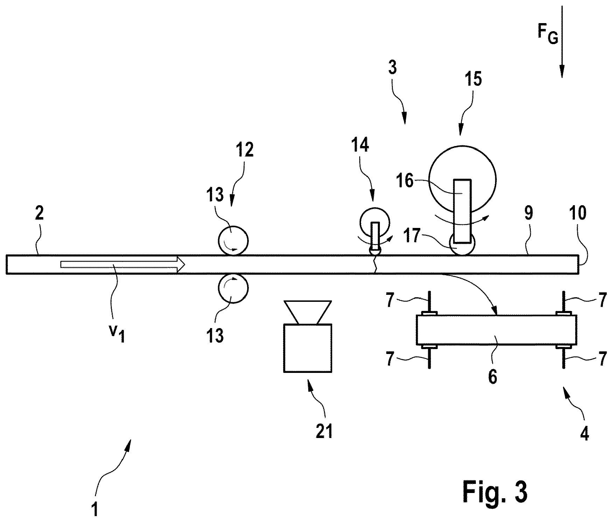

Figur 3 zeigt die Vorrichtung 1 zum Ablängen von Glasrohren 9 von einem Glasrohrstrang 2 schematisch in einer Seitenansicht. Der Glasrohrstrang 2 wird mittels einer Vorschubeinrichtung 12 mit der kontinuierlichen Vorschubgeschwindigkeit v₁ in Pfeilrichtung bewegt. Die Vorschubeinrichtung 12 weist zu diesem Zweck zwei oder mehrere Ziehrollen 13 oder andere geeignete Vorschubsysteme wie Ziehketten oder Riemen auf, die den Glasrohrstrang 2 von der vorgeschalteten, nicht gezeigten Heißformgebung abziehen und zugleich stützen.

Die Vorrichtung 1 weist eine Analysevorrichtung 21, eine Trenneinrichtung 3 sowie eine Transportvorrichtung 4 auf. Die Trenneinrichtung 3 weist eine Ritzeinheit 14 und einen Bruchkraftverstärker 15 auf. Mittels der Ritzeinheit 14 wird der Glasrohrstrang 2 an der erwünschten Trennstelle angeritzt. Die Initialrisserzeugung erfolgt dabei in der Regel mit Diamantwerkzeugen und bevorzugt auf der Oberseite des Glasrohres, d.h. bei der 12:00 Uhr-Position. Dabei werden Mikrorisse in das Glasrohr eingebracht. Da der Glasrohrstrang 2 im Bereich des freien Endes 10 nicht gegen die Gravitationskraft F_{G} abgestützt wird, entsteht durch das vorhandene Rohrgewicht ein Biegemoment, das zur Rißausbreitung führt. Ein umlaufender Riß entsteht, entlang welchem das Rohr abbricht. Wasser unterstützt den Vorgang durch Themperaturschock und Eindringen in den Riß. Das Glasrohr 9 wird so von dem Glasrohrstrang 2 abgetrennt und anschließend kann das abgelängte Glasrohr 9 an die Transportvorrichtung 4 übergeben und der Weiterverarbeitung zugeführt werden. Die Transportvorrichtung 4 weist auch hier ein Förderband 6 mit Mitnehmern 7 auf.

Der Bruchkraftverstärker 15 kommt vorzugsweise ausschließlich beim Abtrennen von Glasrohrstücken 11 zum Einsatz. Glasrohrstücke 11 weisen eine geringere Länge als Glasrohre 9 und damit auch ein geringeres Eigengewicht auf. Ohne den Bruchkraftverstärker 15 kann es deshalb vorkommen, dass ein eingeritztes Glasrohrstück 11 nicht von dem Glasrohrstrang 2 getrennt wird oder ein abweichendes Bruchverhalten aufweist. Durch den Bruchkraftverstärker 15 wird eine die Gravitationskraft F_{G} unterstützende Kraft auf ein Glasrohrstück 11 ausgeübt, so dass dieses von dem Glasrohrstrang 2 abgetrennt wird und das gleiche Bruchverhalten aufweist, wie ein vollständiges Glasrohr 9. Der Bruchkraftverstärker 15 weist hierzu einen umlaufenden Arm 16 auf, der mittels eines Druckstücks 17 bevorzugt von oben auf das abzutrennende Glasrohrstück 11 drückt.

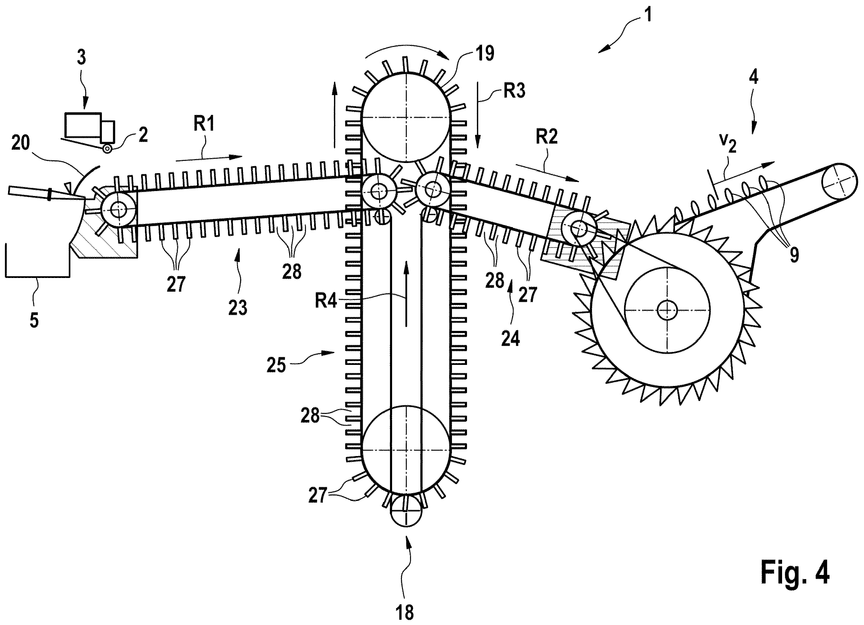

Die vierte Ausführungsform der Vorrichtung 1 zum Ablängen von Glasrohren 9 von einem Glasrohrstrang 2, welche in Figur 4 dargestellt ist, weist eine Trenneinrichtung 3, eine Transportvorrichtung 4 und eine zwischen der Trenneinrichtung 3 und der Transportvorrichtung 4 angeordnete Puffereinrichtung 18 auf. Der Glasrohrstrang 2 weist erneut eine kontinuierliche Vorschubgeschwindigkeit v₁ auf, so dass durch entstehenden Ausschuss unregelmäßig defektfreie Glasrohre 9 abgelängt werden. Die Transportvorrichtung 4 weist eine kontinuierliche Vorschubgeschwindigkeit v₂ auf.

Zum Ausgleichen der unregelmäßigen Zuführung von Glasrohren 9 von der Trenneinrichtung 3 und dem regelmäßigen Abtransport der Glasrohre 9 durch die Transportvorrichtung 4 ist die Puffereinrichtung 18 vorgesehen, die ein erstes Transportband 23, ein zweites Transportband 24 und einen Zwischenspeicher 19 mit einem dritten Transportband 25 aufweist. Jedes Transportband 23, 24, 25 weist eine Mehrzahl von Mitnehmern 27 auf, zwischen denen Fächer 28 gebildet werden. In jedem Fach 28 kann ein einzelnes Glasrohr 9 angeordnet werden. Die Mitnehmer 27 des ersten Transportbandes 23 und des zweiten Transportbandes 24 sind jeweils entlang einer senkrecht zur Zeichenebene angeordnete Achse versetzt zu den Mitnehmern 27 des dritten Transportbandes 25 angeordnet, sodass die Mitnehmer 27 verschiedener Transportbänder 23, 24, 25 bei einer Bewegung eines oder mehrerer der Transportbänder 23, 24, 25 nicht miteinander in Berührung kommen.

Das erste Transportband 23 transportiert defektfreie Glasrohre 9, die mittels der Trenneinrichtung 3 von dem Glasrohrstrang 2 abgetrennt wurden, entlang einer Vorschubrichtung R1 zu dem Zwischenspeicher 19 mit einem Transportband 25. Das zweite Transportband 24 transportiert Glasrohre 9 aus dem Zwischenspeicher 19 entlang einer Vorschubrichtung R2 zu der Transportvorrichtung 4, mittels der die Glasrohre 9 einer Weiterverarbeitung zugeführt werden. Das dritte Transportband 25 bewegt sich entlang einer Vorschubrichtung R3. Um die Abweichung zwischen Zuführung und Abtransport auszugleichen, kann der Zwischenspeicher entlang einer Ausgleichsrichtung R4 bewegt werden.

Das Transportband 25 ist zu diesem Zweck schwimmend gelagert und mit einem internem Kettensystem verbunden. Die Kette von Band 23 und die linke Hälfte der Kette von Transportband 25 sind verkettet und laufen mit gleicher Geschwindigkeit. Die Kette von Band 24 und die rechte Hälfte der Kette von Transportband 25 sind verkettet und laufen ebenfalls mit gleicher Geschwindigkeit. Wird die Geschwindigkeit von Transportband 23 kleiner als diejenige von Transportband 24, dann bewegt sich das ganze Modul 25 nach unten, die linke Seite nimmt damit weniger Rohre auf, als die rechte abgibt. Es erfolgt ein "Speicherabbau". Dabei bleiben die Übergabepositionen Transportband 23 auf 25 und 25 auf 24 an gleicher Stelle. Umgekehrt bewegt sich das ganze Modul 25 nach oben, wenn Transportband 23 schneller als Transportband 24 läuft. Es erfolgt ein "Speicheraufbau".

In der Standardfunktion, wenn überwiegend alle Rohre gut sind, laufen Transportband 23 und Transportband 24 mit gleicher Geschwindigkeit. Wird ein defektbehaftetes Glasrohr 9 abgetrennt und verworfen, wird das erste Transportband 23 nicht bewegt, bis das nächste Gutrohr übergeben wird. Dieser Speierabbau kann solange erfolgen, bis der Speicher eine untere Minimalstellung erreicht hat. Ist der Speicher abgebaut muss das Band 24 kurzzeitig schneller laufen, wenn ein defektbehaftetes Glasrohr 9 abgetrennt und verworfen wird, oder zeitweise mit doppelter Geschwindigkeit laufen, wenn ein Gutrohr abgetrennt wird. Dadurch erfolgt ein Speicheraufbau.

Die Frequenz des Abtransports wird so gewählt, dass sie geringer ist als die Frequenz, mit der defektfreie Glasrohre 9 an dem Glasrohrstrang 2 abgelängt würden, wenn keine Defekte vorlägen. Die Differenz der Frequenzen der Zuführung und des Abtransports gleicht die durch das Abtrennen von defektbehafteten Glasrohstücken bedingten Wartezeiten in der Herstellung aus.

Die Vorrichtung 1 weist außerdem eine Sortiereinrichtung 20 auf, mittels der defektbehaftete Glasrohre 9 aussortiert und in einen Auffangbehälter 5 überführt werden. Die Sortiereinrichtung oder "Schlechtrohrschleuse" weist eine elektrisch oder pneumatisch angetriebene Klappe auf, die bei Feststellung eines defektbehafteten Glasrohres mittels der Analysevorrichtung zwischen den abzutrennenden Rohrabschnitt und das Transportband 23 für das Gutrohr einschwenkt wird und das defektbehaftete Glasrohr in den Auffangbehälter 5 ablenkt.

Die Figur 5 zeigt schematisch den Endbereich eines Glasrohrstrangs 2 mit dem freien Ende 10. Der Glasrohrstrang 2 weist eine Hauptachse X auf, um die der Glasrohrstrang 2 rotationssymmetrisch ist. Eingezeichnet ist als gestrichelte Hilfslinie die Trennstelle im axialen Abstand L vom freien Ende 10 des Glasrohrstrangs 2, an der das defektfreie Glasrohr 9 abzutrennen wäre. Der Glasrohrstrang 2 ist ausgehend von dem freien Ende 10 entlang der Hauptachse X ferner in vier Abschnitte A₁, A₂, A₃ und A₄ unterteilt (n = 3). Die Abschnitte A₁, A₂, A₃, A₄ weisen jeweils eine einheitliche Länge von L/3 auf. Die Trennstelle im Abstand L fällt also mit der Grenze zwischen den Abschnitten A₃ und A₄ zusammen, oder anders gesagt, das abzutrennende Glasrohr 9 besteht aus den Abschnitten A₁, A₂, A₃.

Der Glasrohrstrang 2 bzw. das abzutrennende Glasrohr 9 weist einen Defekt 22 auf. Der Defekt 22 weist einen Abstand L_{A}, gemessen in Längsrichtung, von dem freien Ende 10 des Glasrohrstrangs 2 auf und ist in dem Abschnitt A₂ angeordnet. Unter Berücksichtigung der Position des Defekts 22 bzw. des Abstands L_{A} wird der Glasrohrstrang 2 erfindungsgemäß an der Grenze zwischen den Abschnitten A₂ und A₃ getrennt, wodurch ein Glasrohrstück 11 der Länge 2/3×L entsteht. Der Abschnitt A₃ bildet dann den neuen Abschnitt A₁ für das nächste abzutrennende Glasrohr 9. In diesem Beispielfall wird der Ausschuss gegenüber den bekannten Verfahren, bei denen ein ganzes Glasrohr der Länge L abgetrennt und verworfen würde, um 1/3 L reduziert.

Statistisch befindet sich der Defekt mit gleicher Wahrscheinlichkeit in jedem der drei Abschnitte A₁ bis A₃, wenn man von abschnittsübergreifenden Defekten absieht, so dass der Ausschuss auch insgesamt näherungsweise um 1/3 L auf 2/3 L (= 1/3 x(1/3 L +2/3 L +1 L)) vermindert werden kann. Bei Erhöhung von n, also der Anzahl der Abschnitte, verringert sich der Ausschuss weiter, 1/2 L kann er aus statistischen Gründen allerdings nicht unterschreiten.

### Bezugszeichenliste

- 1: Vorrichtung
- 2: Glasrohrstrang
- 3: Trenneinrichtung
- 4: Transportvorrichtung
- 5: Auffangbehälter
- 6: Förderband
- 7: Mitnehmer
- 8: Fach
- 8': Leerfach
- 9: Glasrohr

- 10: freies Ende
- 11: Glasrohrstück
- 12: Vorschubeinrichtung
- 13: Ziehrollen
- 14: Ritzeinheit
- 15: Bruchkraftverstärker
- 16: umlaufender Arm
- 17: Druckstücks
- 18: Puffereinrichtung
- 19: Zwischenspeicher

- 20: Sortiereinrichtung
- 21: Analysevorrichtung
- 22: Defekt
- 23: erstes Transportband
- 24: zweites Transportband
- 25: drittes Transportband
- 27: Mitnehmer
- 28: Fach

- A₁ bis A₄: Abschnitt
- F_{G}: Gravitationskraft
- L: Länge
- R: Vorschubrichtung
- R1: Vorschubrichtung
- R2: Vorschubrichtung
- R3: Vorschubrichtung
- R4: Ausgleichsrichtung
- v₁: Vorschubgeschwindigkeit
- v₂: Vorschubgeschwindigkeit
- X: Hauptachse

## Patentansprüche

1. Verfahren zum Ablängen von Glasrohren (9) mit einer Länge L von einem sich mit einer Vorschubgeschwindigkeit v₁ bewegenden Glasrohrstrang (2), wobei der Glasrohrstrang (2) mittels einer Analysevorrichtung (21) auf Defekte (22) untersucht wird und wobei ermittelt wird, ob ein abzutrennendes Glasrohr (9) entweder defektfrei (Fall 1) oder defektbehaftet (Fall 2) ist, wobei im Fall 1 ein defektfreies Glasrohr (9) der Länge L von dem Glasrohrstrang (2) abgetrennt wird;
**gekennzeichnet durch** folgende Schritte im Fall 2:
a) Ermitteln eines Abstands L_{A} des Defekts (22) in Längsrichtung von einem freien Ende (10) des abzutrennenden Glasrohrs (9), wobei der Abstand L_{A} von dem Teil des Defekts (22) mit dem größten Abstand zu dessen freiem Ende (10) bestimmt ist; und
b) Abtrennen eines defektbehafteten Glasrohrstücks (11) oder Glasrohrs (9) von dem Glasrohrstrang (2) in einem Abstand L_{S} von dem freien Ende (10) des Glasrohrs (9) in Abhängigkeit von L_{A}.

2. Verfahren zum Ablängen von Glasrohren (9) gemäß Anspruch 1,
**dadurch gekennzeichnet, dass** der Glasrohrstrang (2) ausgehend von dem freien Ende des abzutrennenden Glasrohrs (9) in n+1 Abschnitte A₁ bis Aₙ₊₁ identischer Länge L/n mit n = {2, 3, 4, ...} unterteilt wird, dass nach Schritt a) durch den Abstand L_{A} ermittelt wird, in welchem Abschnitt A_{D} = {A₁,..., Aₙ} der Defekt (22) liegt und dass der Glasrohrstrang (2) an einer Grenze zwischen Abschnitt A_{D} und Abschnitt A_{D+1} = {A₂,..., Aₙ₊₁} abgetrennt wird.

3. Verfahren zum Ablängen von Glasrohren (9) gemäß Anspruch 2,
**dadurch gekennzeichnet, dass** n = 2 ist.

4. Verfahren zum Ablängen von Glasrohren (9) gemäß einem der vorhergehenden Ansprüche,
**dadurch gekennzeichnet, dass** defektfreie Glasrohre (9) nach dem Abtrennen einer Transportvorrichtung (4) übergeben werden.

5. Verfahren zum Ablängen von Glasrohren (9) gemäß Anspruch 4,
**dadurch gekennzeichnet, dass** die Transportvorrichtung (4) eine konstante Vorschubgeschwindigkeit v₂ aufweist.

6. Verfahren zum Ablängen von Glasrohren (9) gemäß Anspruch 4 oder 5,
**dadurch gekennzeichnet, dass** die Transportvorrichtung (4) eine Mehrzahl von Fächern (8) für Glasrohre (9) aufweist.

7. Verfahren zum Ablängen von Glasrohren (9) gemäß Anspruch 6,
**dadurch gekennzeichnet, dass** die Vorschubgeschwindigkeit v₂ und die Teilung der Fächer (8) so gewählt ist, dass unmittelbar nacheinander abgelängte defektfreie Glasrohre (9) in jedes n-te Fach (8) der Transportvorrichtung (4) übergeben werden.

8. Verfahren zum Ablängen von Glasrohren (9) gemäß einem der vorhergehenden Ansprüche,
**dadurch gekennzeichnet, dass** abgetrennte, defektfreie Glasrohre (9) gepuffert und anschließend, insbesondere regelmäßig, abtransportiert werden.

9. Verfahren zum Ablängen von Glasrohren (9) gemäß einem der vorhergehenden Ansprüche,
**dadurch gekennzeichnet, dass** beim Abtrennen eines Glasrohrstücks (11) mit einer Länge L_{S} < L eine die Gravitationskraft F_{G} unterstützende Kraft Fu auf das abzutrennende Glasrohrstück (11) ausgeübt wird.

10. Verfahren zum Ablängen von Glasrohren (9) gemäß einem der vorhergehenden Ansprüche,
**dadurch gekennzeichnet, dass** defektbehaftete Glasrohre (9) und Glasrohrstücke (11) nach dem Abtrennen in einen Auffangbehälter (5) überführt werden.

11. Vorrichtung (1) zum Ablängen von Glasrohren (9) mit einer Länge L von einem sich mit einer Vorschubgeschwindigkeit v₁ bewegenden Glasrohrstrang (2) mit einer Analysevorrichtung (21) zur Untersuchung des Glasrohrstrangs (2) auf Defekte (22), einer Trenneinrichtung (3) zum Abtrennen von Glasrohren (9) und Glasrohrstücken (11) von dem Glasrohrstrang (2) sowie einer Transportvorrichtung (4) zum Abtransportieren der abgetrennten Glasrohre (9),
**dadurch gekennzeichnet, dass** die Analysevorrichtung (21) eingerichtet ist, zu ermitteln, ob ein abzutrennendes Glasrohr (9) entweder defektfrei (Fall 1) oder defektbehaftet (Fall 2) ist, dass die Analysevorrichtung (21) ferner eingerichtet ist, im Fall 1 ein Steuersignal auszugeben, welches die Trenneinrichtung (3) veranlasst, ein defektfreies Glasrohr (9) der Länge L von dem Glasrohrstrang (2) abzutrennen, und dass die Analysevorrichtung (21) ferner eingerichtet ist, im Fall 2 zu ermitteln, in welchem Abstand L_{A} der Defekt (22) in Längsrichtung vom freien Ende (10) des abzutrennenden Glasrohrs (9) lokalisiert ist, wobei der Abstand L_{A} von dem Teil des Defekts (22) mit dem größten Abstand zu dessen freien Ende (10) bestimmt ist, und ein Steuersignal auszugeben, welches die Trenneinrichtung (3) veranlasst, ein defektbehaftetes Glasrohrstück (11) oder Glasrohr (9) von dem Glasrohrstrang (2) in einem Abstand Ls von dem freien Ende (10) des Glasrohrs (9) in Abhängigkeit von L_{A} abzutrennen.

12. Vorrichtung (1) gemäß Anspruch 11,
**dadurch gekennzeichnet, dass** ein Auffangbehälter (5) für defektbehaftete Glasrohre (9) und Glasrohrstücke (11) vorgesehen ist.

13. Vorrichtung (1) gemäß Anspruch 11 oder 12,
**dadurch gekennzeichnet, dass** eine Sortiereinrichtung (20) vorgesehen ist, die eingerichtet ist, defektbehaftete Glasrohre (9) und Glasrohrstücke (11) in den Auffangbehälter (5) und defektfreie Glasrohre (9) zu der Transportvorrichtung (4) zu überführen.

14. Vorrichtung (1) gemäß einem der Ansprüche 11 bis 13,
**dadurch gekennzeichnet, dass** zwischen der Trenneinrichtung (3) und der Transportvorrichtung (4) eine Puffereinrichtung (18) vorgesehen ist, die eingerichtet ist, regelmäßig und unregelmäßig abgetrennte defektfreie Glasrohre (9) von der Trenneinrichtung (3) aufzunehmen und diese regelmäßig an die Transportvorrichtung (4) abzugeben.

15. Vorrichtung (1) gemäß einem der Ansprüche 11 bis 14,
**dadurch gekennzeichnet, dass** die Trenneinrichtung (3) einen Bruchkraftverstärker (15) aufweist, der eingerichtet ist, eine die Gravitationskraft F_{G} unterstützende Kraft F_{U} auf ein abzutrennendes Glasrohrstück (11) mit einer Länge L_{S} < L auszuüben.

16. Vorrichtung (1) gemäß Anspruch 15,
**dadurch gekennzeichnet, dass** der Bruchkraftverstärker (15) ein Exzenterelement und/oder einen Druckluftzylinder und/oder einen umlaufenden Arm (16) aufweist, das/der eingerichtet ist, unmittelbar oder mittels eines Druckstücks (17) auf das abzutrennende Glasrohrstück (11) zu drücken.
